# EUROPÄISCHE PATENTSCHRIFT

(11) **EP 1 678 883 B1**
(45) Veröffentlichungstag und Bekanntmachung des Hinweises auf die Patenterteilung: **11.07.2007**
(21) Anmeldenummer: 04817386.8
(22) Anmeldetag: 21.10.2004
(51) Int. Cl.: H04L 12/28

(54) **VERFAHREN ZUR SIGNALISIERUNG EINES PFADES AN FUNKSTATIONEN EINES FUNKKOMMUNIKATIONSSYSTEMS**
METHOD FOR SIGNALING A PATH TO RADIO STATIONS OF A RADIO COMMUNICATIONS SYSTEM
PROCEDE POUR SIGNALER UN PARCOURS A DES STATIONS RADIO D'UN SYSTEME DE RADIOCOMMUNICATION

(30) Priorität: 31.10.2003 DE 10350909
(43) Veröffentlichungstag der Anmeldung: 12.07.2006
(73) Patentinhaber: SIEMENS AKTIENGESELLSCHAFT, 80333 München (DE)
(72) Erfinder: LI, Hui, Chaoyang District, 100102 Beijing (CN)
(86) Internationale Anmeldenummer: PCT/EP2004/052601
(87) Internationale Veröffentlichungsnummer: WO 2005/043823

(56) Entgegenhaltungen:
- EP-A1- 1 398 910
- WO-A1-01/11833
- YU-CHING HSU ET AL: "Base-centric routing protocol for multihop cellular networks" 17. November 2002 (2002-11-17), GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, PAGE(S) 158-162 , XP010635933 ISBN: 0-7803-7632-3 Seite 159, Kapitel "II. Architecture of Multihop Cellular Networks" Seite 159 bis 160, Kapitel "III. Base-Centric Routing (BCR) Protocol" Abbildung 3
- HUI LI ET AL: "Comparison of ad hoc and centralized multihop routing" 27. Oktober 2002 (2002-10-27), , PAGE(S) 791-795 , XP010619198 Seite 792 bis 793, Kapitel "III. Centralized Multihop Routing" Abbildung 1

## Beschreibung

Die Erfindung betrifft ein Verfahren zur Ermittlung eines Pfades zwischen einer ersten und einer zweiten Funkstation eines Funkkommunikationssystems. Weiterhin betrifft die Erfindung eine Funkeinrichtung zur Durchführung des Verfahrens.

In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige teilnehmerseitige Funkstationen, Funkzugangspunkte oder Basisstationen handeln. Das Abstrahlen der elektromagnetischen Wellen erfolgt dabei mit Trägerfrequenzen, die in dem für das jeweilige System vorgesehenen Frequenzband liegen.

Funkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Für das zellulare GSM-Mobilfunksystem werden Frequenzen bei 900, 1800 und 1900 MHz genutzt.

Außer diesen weiträumig organisierten (supralokalen) zellularen, hierarchischen Funknetzen gibt es auch drahtlose lokale Netze (WLANs, wireless Local Area Networks) mit einem in der Regel räumlich deutlich stärker begrenzten Funkabdeckungsbereich. Die von den WLAN-Funkzugangspunkten (AP: Access Point) abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM. Als lokale funkgestützte Netze scheinen sich jedoch derzeit vor allem in den USA und Europa fast ausschließlich Produkte auf Basis der IEEE 802.11-Familie durchzusetzen.

In vielen WLANs können teilnehmerseitige Funkstationen über einen oder mehrere Sprünge (Hop bzw. Multihop) direkt miteinander kommunizieren. Weiterhin können sie über WLAN-Funkzugangspunkte (AP: Access Point), welche in der Regel an andere Kommunikationsnetze angeschlossen sind, Daten versenden und empfangen. Die Anbindung einer teilnehmerseitigen Funkstation an einen Funkzugangspunkt kann entweder direkt oder über Sprünge mit Datenweiterleitung durch andere Funkstationen erfolgen.

Allgemein wird für WLANs der nicht lizenzierte Frequenzbereich um 2,4 GHz genutzt, wobei die Datenübertragungsraten bei bis zu 11 Mbit/s liegen. Künftige WLANs können im 5 GHz Bereich betrieben werden und Datenraten von über 50 Mbit/s erreichen. Somit stehen den Teilnehmern der WLANs Datenraten zur Verfügung, die erheblich höher liegen, als diejenigen, die von der dritten Mobilfunkgeneration (z.B. UMTS) angeboten werden.

Der Zugriff von Funkstationen auf die gemeinsamen Funkressourcen des Übertragungsmediums, wie zum Beispiel Zeit, Frequenz, Leistung oder Raum, wird bei Funkkommunikationssystemen durch Vielfachzugriffsverfahren (Multiple Access, MA) geregelt. Bei orthogonalen Frequenz-Vielfachzugriffsverfahren (OFDM, Orthogonal Frequency Division Multiplex) wird ein breites Frequenzband in eine Mehrzahl schmalbandiger Subbänder aufgeteilt. Den Funkstationen werden zur Kommunikation eines, mehrere oder alle Subbänder zugewiesen.

In einem Adhoc-Modus eines Funkkommunikationssystems übertragen teilnehmerseitige Funkstationen Daten zueinander, ohne dass es der Weiterleitung dieser Daten durch eine zentrale Einrichtung bedarf. Die Verbindung zwischen zwei teilnehmerseitigen Funkstationen erfolgt dabei entweder direkt oder bei größeren Entfernungen über weitere teilnehmerseitige Funkstationen, die für diese Verbindung Relaisstationen bilden. Die teilnehmerseitigen Funkstationen eines solchen selbstorganisierenden Netzes können mobile teilnehmerseitige Funkstationen (beispielsweise Mobilfunkgeräte von Personen oder in Verkehrsfahrzeugen) und/oder vorwiegend stationäre teilnehmerseitige Funkstationen (beispielsweise Computer, Drucker, Haushaltsgeräte) sein.

Bevor es zur Übertragung von Daten zwischen zwei teilnehmerseitigen Funkstationen in einem Adhoc-Modus eines Funkkommunikationssystems kommen kann, muss zuvor ein Pfad zwischen diesen beiden Funkstationen ermittelt werden. Dieser verläuft über eine Anzahl von Funkstationen, welche die Daten weiterleiten. Auch im Falle einer teilnehmerseitigen Funkstation eines WLAN, welche sich außerhalb des direkten Funkabdeckungsbereichs des Funkzugangspunktes aufhält, muss ein Pfad zwischen der teilnehmerseitigen Funkstation und dem Funkzugangspunkte ermittelt werden, bevor eine Kommunikation zwischen der teilnehmerseitigen Funkstation und dem Funkzugangspunkt stattfinden kann. Die Bestimmung eines Pfades durch ein Funkkommunikationssystem wird als Routing bezeichnet.

Ein bekanntes Verfahren zur Bestimmung eines Pfades in einem Funkkommunikationssystem wird beispielsweise durch die Veröffentlichung "Base-Centric Routing Protocol for Multihop Cellular Networks" von Yu-Ching Hsu und Ying-Dar Lin beschrieben. In diesem Verfahren unterstützt die Basisstation eines Funknetzes die Bestimmung des Pfades, indem sie auf Anfrage einer Mobilstation den Pfad berechnet und Pfad-Informationen an die anfragende Mobilstation übermittelt. Jedoch muss die Pfad-Information von der anfragenden Mobilstation an andere Mobilstation des Pfades weitergeleitet werden.

Der Erfindung liegt die Aufgabe zugrunde, ein effizientes Verfahren zur Ermittlung eines Pfades in einem Funkkommunikationssystem, in welchem sich die Funkstationen eines Mehrträgerverfahrens zur Kommunikation bedienen, aufzuzeigen. Weiterhin soll eine Funkeinrichtung zur Durchführung des Verfahrens aufgezeigt werden.

Diese Aufgabe hinsichtlich des Verfahrens wird durch ein Verfahren mit den Merkmalen des Anspruchs 1 gelöst.

Vorteilhafte Ausgestaltungen und Weiterbildungen sind Gegenstand von Unteransprüchen.

Das erfindungsgemäße Verfahren dient zur Ermittlung eines Pfades zwischen einer ersten und einer zweiten Funkstation eines Funkkommunikationssystems, wobei dieses Funkkommunikationssystem neben der ersten und der zweiten Funkstation eine oder mehrere weitere Funkstationen umfasst. Zur Kommunikation zwischen den Funkstationen wird ein in eine Mehrzahl von Subbändern aufgeteiltes Frequenzband verwendet. Den Funkstationen ist jeweils mindestens ein Subband des Frequenzbandes zur Kommunikation zugewiesen. Der zu ermittelnde Pfad verläuft über eine oder mehrere der weiteren Funkstationen, so dass Informationen zwischen der ersten und der zweiten Funkstation über den Pfad übertragbar sind. Der Pfad wird zumindest teilweise von einer Funkeinrichtung auf Anfrage der ersten Funkstation bestimmt. Die Funkeinrichtung übermittelt dann der ersten Funkstation zumindest Pfad-Identifikations-information. Weiterhin übermittelt die Funkeinrichtung zumindest einem Teil der Funkstationen des Pfades jeweils Pfad-Identifikationsinformation und Funkstations-Identifikationsinformation von zumindest einer anderen Funkstation des Pfades und/oder von der ersten und/oder der zweiten Funkstation und Subband-Information über mindestens ein der mindestens einen zu der Funkstations-Identifikationsinformation korrespondierenden Funkstation zugewiesenes Subband.

Den Funkstationen des Funkkommunikationssystems sind im Rahmen der Erfindung Subbänder zur Kommunikation untereinander zugewiesen. Es ist möglich, dass Funkstationen existieren, welchen aktuell keine Subbänder zugewiesen sind, so z.B. aktuell nicht eingebuchte Funkstationen oder Funkstation in einem speziellen Modus. Diese Funkstationen sind jedoch für die Erfindung nicht von Relevanz, so dass hier nur diejenigen Funkstationen betrachtet werden, welchen mindestens ein Subband zur Kommunikation zugewiesen ist. Bezüglich der Art der Zuweisung der Subbänder zu den Funkstationen ist es möglich, dass den verschiedenen Funkstation jeweils unterschiedliche Subbänder zugewiesen werden, oder auch, dass Subbänder mehreren Funkstationen gemeinsam zugewiesen werden.

Stellt die erste-Funkstation an die Funkeinrichtung, welche z. B. durch eine Basisstation realisiert sein kann, eine Anfrage zur Ermittlung eines Pfades zu einer zweiten Funkstation, so bestimmt die Funkeinrichtung entweder alle Funkstationen des Pfades, d. h. alle Funkstationen, welche Informationen zwischen der ersten und der zweiten Funkstation weiterleiten, oder auch nur einen Teil dieser Funkstationen. Die Bestimmung von Funkstationen des Pfades in der Funkeinrichtung kann auch dadurch realisiert sein, dass die Funkeinrichtung die Anfrage an eine mit der Funkeinrichtung verbundene Einrichtung weiterleitet, welche die Funkstationen bestimmt und das Ergebnis an die Funkeinrichtung zurücksendet. Nach der Bestimmung der Funkstationen übermittelt die Funkeinrichtung allen von ihr bestimmten Funkstationen des Pfades oder einem Teil der von ihr bestimmten Funkstation des Pfades Informationen betreffend den Pfad, welche Pfad-Identifikationsinformation und Funkstations-Identifikationsinformation und Subband-Information umfassen.

Die Anfrage der ersten Funkstation kann direkt oder über andere Funkstationen an die Funkeinrichtung gesendet werden. Bei dem zu ermittelnden Pfad kann es sich z.B. um einen Pfad zwischen einer teilnehmerseitigen Funkstation und einem Funkzugangspunkt eines WLAN oder um einen Pfad zwischen zwei teilnehmerseitigen Funkstationen in einem Adhoc-Modus des Funkkommunikationssystems handeln.

In Weiterbildung der Erfindung übermittelt die Funkeinrichtung der ersten Funkstation zusätzlich Funkstations-Identifikationsinformation der ihr in Pfadrichtung von der ersten zu der zweiten Funkstation benachbarten Funkstation des Pfades und Subband-Information über mindestens ein dieser benachbarten Funkstation zugewiesenes Subband. Somit werden der ersten Funkstation Informationen gesendet über ihre einzige benachbarte Funkstation des Pfades, und zwar Funkstations-Identifikationsinformation und Subband-Information dieser einzigen Nachbarstation des Pfades. Weiterhin übermittelt die Funkeinrichtung jeder Funkstation des Pfades Pfad-Identifikationsinformation, sowie Funkstation-Identifikationsinformation der ihr in Pfadrichtung von der ersten zu der zweiten Funkstation benachbarten Funkstation des Pfades oder im Falle der in Pfadrichtung von der ersten zu der zweiten Funkstation letzten Funkstation des Pfades der zweiten Funkstation, und Subband-Information über mindestens ein dieser benachbarten Funkstation zugewiesenes Subband. Somit wird an jede Funkstation des Pfades sowohl die Pfad-Identifikationsinformation als auch eine Identifikationsinformation der benachbarten Funkstation des Pfades auf Seiten der zweiten Funkstation gesendet. Da die der zweiten Funkstation benachbarte Funkstation des Pfades keine benachbarte Funkstation des Pfades auf Seiten der zweiten Funkstation aufweist, wird dieser die Funkstation-Identifikationsinformation der zweiten Funkstation gesendet. Somit ist allen Funkstationen des Pfades die Identifikationsinformation derjenigen Funkstation bekannt, an welche sie Daten, die von der ersten zu der zweiten Funkstation gesendet werden sollen, weiterleiten soll. Zusätzlich wird jeder Funkstation des Pfades Subband-Information dieser Funkstation, an welche Daten von der ersten zu der zweiten Funkstation weiterzuleiten sind, übermittelt.

Vorteilhafterweise übermittelt die Funkeinrichtung jeder Funkstation des Pfades zusätzlich Funkstations-Identifikationsinformation der ihr in Pfadrichtung von der zweiten zu der ersten Funkstation benachbarten Funkstation des Pfades oder im Falle der in Pfadrichtung von der zweiten zu der ersten Funkstation letzten Funkstation des Pfades der ersten Funkstation, und Subband-Information über mindestens ein dieser benachbarten Funkstation zugewiesenes Subband. Hiermit werden somit Informationen über die Nachbarfunkstationen auf Seiten der ersten Funkstation übertragen. Da die der ersten Funkstation benachbarte Funkstation des Pfades keine benachbarte Funkstation des Pfades auf Seiten der ersten Funkstation aufweist, wird dieser Funkstation Funkstations-Identifikationsinformation der ersten Funkstation übermittelt. Somit werden an alle Funkstationen des Pfades Funkstations-Identifikationsinformation und Subband-Information derjenigen Funkstation übermittelt, an welche Daten weiterzuleiten sind, die von der zweiten zu der ersten Funkstation über den Pfad übertragen werden.

Es ist möglich, dass die Funkeinrichtung der zweiten Funkstation zumindest Pfad-Identifikationsinformation übermittelt. In Ausgestaltung der Erfindung übermittelt die Funkeinrichtung der zweiten Funkstation zusätzlich Funkstations-Identifikationsinformation der ihr in Pfadrichtung von der zweiten zu der ersten Funkstation benachbarten Funkstation des Pfades und Subband-Information über mindestens ein dieser benachbarten Funkstation des Pfades zugewiesenes Subband. Somit werden der zweiten Funkstation Informationen über ihre einzige benachbarte Funkstation des Pfades gesendet, wobei diese Informationen für eine Versendung von Daten von der zweiten Funkstation zu der ersten Funkstation über den Pfad von Relevanz sind.

In einer Weiterbildung der Erfindung sind die Funkstationen des Funkkommunikationssystems in Gruppen zusammengefasst und die Funkstationen des Teils der Funkstationen des Pfades, welchen die Funkeinrichtung Pfad-Identifikationsinformation, Funkstations-Identifikationsinformation und Subband-Information übermittelt, gehören jeweils einer unterschiedlichen Gruppe an. Vorteilhafterweise sind jeder Gruppe voneinander unterschiedliche Subbänder zur Kommunikation zugewiesen. Die Funkeinrichtung übermittelt die Pfad-Identifikationsinformation, Funkstations-Identifikationsinformation und Subband-Information nicht an mehrere Funkstationen einer Gruppe. In diesem Fall ist es möglich, dass die Funkeinrichtung lediglich einen Teil des zu ermittelnden Pfades bestimmt, indem sie eine Anzahl von Gruppen auswählt, über welche der Pfad verlaufen soll und jeweils einer Funkstation der ausgewählten Gruppen die jeweilige Pfad-Identifikationsinformation, Funkstations-Identifikationsinformation und Subband-Information überträgt.

Es ist vorteilhaft, wenn sich die der Funkstation oder den Funkstationen des Teils der Funkstationen übermittelte Funkstations-Identifikations-information und Subband-Information auf die ihnen in Pfadrichtung von der ersten zu der zweiten Funkstation nächste Funkstation des Teils der Funkstationen oder bei der in Pfadrichtung von der ersten zu der zweiten Funkstation letzten Funkstation des Teils der Funkstation auf die zweite Funkstation beziehen. Somit sendet die Funkeinrichtung der oder den von ihr ausgewählten Funkstationen jeweils die Informationen über die benachbarte ausgewählte Funkstation auf Seiten der zweiten Funkstation. Da die ausgewählte Funkstation, welche die letzte ausgewählte Funkstation in Richtung der zweiten Funkstation ist, keine solche benachbarte Funkstation des Pfades aufweist, werden dieser die Funkstations-Identifikationsinformation und Subband-Information der zweiten Funkstation übermittelt. Somit ist der ausgewählten Funkstation oder den ausgewählten Funkstationen die Information bekannt, welche sie zur Weiterleitung von Daten, welche von der ersten zu der zweiten Funkstation über den Pfad versendet werden sollen, an die nächste Gruppe in Richtung der zweiten Funkstation benötigen.

Zusätzlich können sich die der Funkstation oder den Funkstationen des Teils der Funkstationen übermittelte Funkstations-Identifikations-Information und Subband-Information auf die ihnen in Pfadrichtung von der zweiten zu der ersten Funkstation nächsten Funkstation des Teils der Funkstationen oder bei der in Pfadrichtung von der zweiten zu der ersten Funkstation letzten Funkstation des Teils der Funkstationen auf die erste Funkstation beziehen. Hierbei werden der oder den ausgewählten Funkstationen somit Informationen übermittelt, welche bei einer Datenübertragung von der zweiten zu der ersten Funkstation von Relevanz sind.

In Ausgestaltung der Erfindung übermittelt mindestens eine Funkstation des Teils der Funkstationen ihr von der Funkeinrichtung übermittelte Pfad-Identifikationsinformation und/oder Funkstations-Identifikationsinformation und/oder Subband-Information an mindestens eine Funkstation ihrer Gruppe, an welche keine Pfad-Identifikationsinformation, Funkstations-Identifikationsinformation und Subband-Information von der Funkeinrichtung übermittelt wurde, weiter. So kann z. B. diejenige Funkstation einer Gruppe, an welche die Informationen bezüglich des Pfades von der Funkeinrichtung gesendet wurden, eine andere Funkstation ihrer Gruppe auswählen, welche Daten an die Nachbargruppe des Pfades weiterleiten soll. Hierzu übermittelt sie dieser Funkstation die ihr von der Funkeinrichtung übermittelten Informationen über den Pfad, d.h. Pfad-Identifikationsinformation, Funkstations-Identifikationsinformation der ausgewählten Funkstation der benachbarten Gruppe, und die dazugehörige Subband-Information.

Es ist vorteilhaft, wenn die Funkeinrichtung der ersten Funkstation und/oder der zweiten Funkstation und/oder zumindest einer Funkstation des Pfades bei der Übermittlung der Pfad-Identifikationsinformation mindestens ein Subband zuweist. Diese Zuweisung von mindestens einem Subband kann aus einer erstmaligen Zuweisung eines Subbandes bestehen, oder auch aus einer Änderung eines zuvor zugewiesenen Subbandes. So können mit der Übermittlung der Informationen über den von Funkeinrichtung bestimmten Pfad Funkressourcen für eine Datenübertragung von der ersten zu der zweiten Funkstation in geeignetem Umfang an Funkstationen des Pfades vergeben werden. Die Zuweisung des mindestens einen Subbandes kann hierbei in der gleichen Nachricht wie die Pfad-Identifikationsinformation oder auch in einer separaten Nachricht, welche vor oder nach der Pfad-Identifikationsinformation versendet wird, erfolgen.

Die obengenannte Aufgabe hinsichtlich der Funkeinrichtung wird durch eine Funkeinrichtung mit den Merkmalen des Anspruchs 11 gelöst.

Die erfindungsgemäße Funkeinrichtung weist Mittel zum Speichern von Nachbarschaftsbeziehungen zwischen Funkstationen eines Funkkommunikationssystems auf. Somit kann die Funkeinrichtung die aktuelle Topologie des Netzwerkes speichern. Hierzu übertragen die einzelnen Funkstationen vorteilhafterweise Informationen über von ihnen ermittelte Nachbarfunkstationen an die Funkeinrichtung. Weiterhin weist die Funkeinrichtung Mittel zum jeweiligen Zuweisen von Subbändern eines für die Kommunikation zwischen den Funkstationen verwendeten Frequenzbandes zu mindestens einem Teil der Funkstationen auf, sowie Mittel zum Speichern von Informationen über die den Funkstationen zugewiesenen Subbänder. Weiterhin umfasst die erfindungsgemäße Funkeinrichtung Mittel zum Bestimmen von zumindest Teilen eines Pfades zwischen einer ersten und einer zweiten Funkstation auf Anfrage, wobei der Pfad über eine oder mehrere der weiteren Funkstationen verläuft, so dass Informationen zwischen der ersten und der zweiten Funkstation über den Pfad übertragbar sind. Schließlich weist die Funkeinrichtung Mittel zum Versenden von Informationen an mindestens eine Funkstation des Pfades auf, wobei diese Informationen Pfad-Identifikationsinformation des bestimmten Pfades, Funkstations-Identifikationsinformation von zumindest einer anderen Funkstation des Pfades oder der zweiten Funkstation, sowie Subband-Information über mindestens ein der mindestens einen zu der Funkstation-Identifikationsinformation korrespondierenden Funkstation zugewiesenes Subband.

Die erfindungsgemäße Funkeinrichtung eignet sich insbesondere zur Durchführung des erfindungsgemäßen Verfahrens. Hierzu kann sie weitere geeignete Mittel umfassen.

Im folgenden wird die Erfindung anhand eine Ausführungsbeispiels näher erläutert. Dabei zeigen
- Figur 1:: einen ersten Pfad durch ein Funkkommunikationssystem,
- Figur 2:: einen zweiten Pfad durch ein Funkkommunikationssystem,
- Figur 3:: eine erfindungsgemäße Funkeinrichtung in Form einer Basisstation.

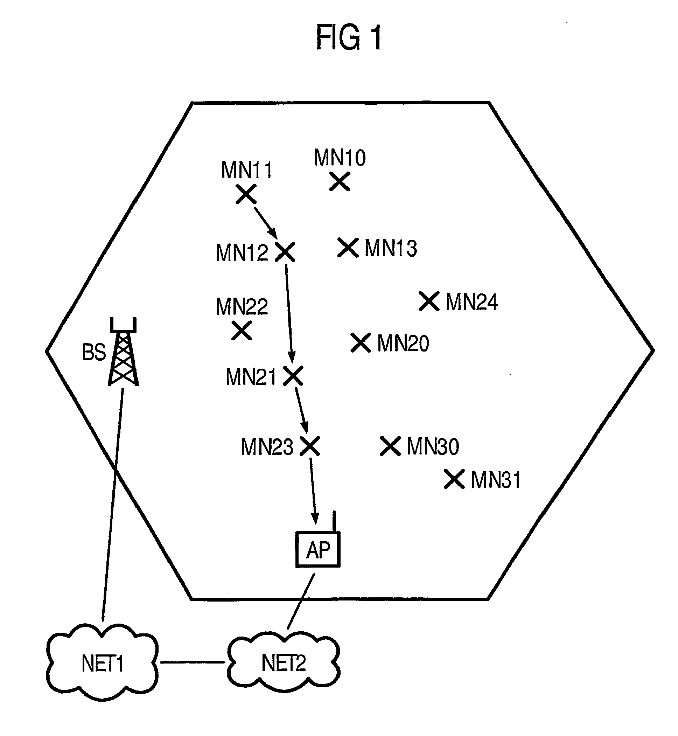

Figur 1 zeigt ein Funkkommunikationssystem in Form eines WLAN, welches die Mobilstationen MN10, MN11, MN12, MN13, MN20, MN21, MN22, MN23, MN24, MN30 und MN 31 umfasst, und einen Funkzugangspunkt AP. Der Funkzugangspunkt AP ist an ein Netzwerk NET2 angebunden, welches den Mobilstationen des WLAN die Kommunikation mit anderen Kommunikationssystemen und Datennetzen ermöglicht. Weiterhin ist in Figur 1 eine Basisstation BS eines zellularen Mobilfunkkommunikationssystems mit ihrer durch ein Sechseck angedeuteten Funkzelle dargestellt. Die Basisstation BS ist mit einem Kernnetz NET1 verbunden, welches wiederum eine Verbindung zu dem Netzwerk NET2 des WLAN aufweist. Bei dem zellularen Mobilfunkkommunikationssystem kann es sich zum Beispiel um ein System nach dem Standard GSM oder UMTS handeln.

Die Verbindung der Mobilstationen MN10, MN11, MN12, MN13, MN20, MN21, MN22, MN23, MN24, MN30 und MN 31 mit dem zellularen Mobilfunkkommunikationssystem ermöglicht einen ununterbrochenen Funkkontakt der Mobilstationen, unabhängig von ihrer Mobilität und ihrem Aufenthaltsort. Diese kann immer dann als Rückzugsposition verwendet werden, wenn keine Funkabdeckung durch ein WLAN vorliegt. WLANs werden im Bereich des zellularen Mobilfunkkommunikationssystems errichtet, um z.B. den Mobilstationen den breitbandigen Funkzugang zum Internet über Funkzugangspunkte wie den Funkzugangspunkt AP zu ermöglichen. Typischerweise weisen Funkzugangspunkte eine stark begrenzte Sendeleistung wie z.B. 1W im 2GHz- oder 5GHz-Bereich auf, so dass ihr Funkabdeckungsbereich sich maximal auf mehrere hundert Meter erstreckt. Außerhalb dieses direkten Funkabdeckungsbereiches der Funkzugangspunkte werden Daten von oder zu den Funkzugangspunkten über mehrere Hops durch die Mobilstationen übertragen.

Im folgenden wird davon ausgegangen, dass das WLAN ein OFDM-Übertragungsverfahren verwendet. Hierbei wird ein Frequenzband in eine Anzahl von Subbändern aufgeteilt. Die Subbänder werden dann dynamisch den teilnehmerseitigen Mobilstationen zur Kommunikation zugewiesen. Einer Mobilstation kann hierbei eines oder mehrere Subbänder zugewiesen werden, wobei die Subbänder dann von der Mobilstation in der Regel zur Versendung von Daten an benachbarte Mobilstationen verwendet werden. Es ist jedoch auch möglich, zur Versendung von Daten an eine benachbarte Mobilstation die dieser Mobilstation zugewiesenen Subbänder zu verwenden.

Im betrachteten Beispiel der Figur 1 beabsichtigt die Mobilstation MN11, Daten zu dem Funkzugangspunkt AP zu versenden. Da dieser sich außerhalb ihrer Funkreichweite befindet, muss zuvor ein Pfad zwischen der Mobilstation MN11 und dem Funkzugangspunkt AP ermittelt werden. Hierzu wird davon ausgegangen, dass die Basisstation BS die Nachbarschaftsbeziehungen unter den Mobilstationen, dass heißt die Topologie des Netzwerkes, kennt.

Sobald eine Mobilstation in den Funkabdeckungsbereichen der Basisstation BS gelangt, teilt die Basisstation BS dieser Mobilstation die zentrale Frequenz des zur Kommunikation innerhalb des WLAN verwendeten Frequenzbandes mit. Die Mobilstationen in der Funkzelle der Basisstation BS senden in regelmä-ßigen Anständen Signalisierungsmeldungen aus, anhand derer sie von ihren Nachbarmobilstationen detektiert werden können. Die Aussendung dieser Signalisierungsnachrichten kann entweder für alle Mobilstationen auf einem gemeinsamen Subband erfolgen, oder die Basisstation BS weist den Mobilstationen jeweils verschiedene Subbänder zur Versendung der Signalisierungsnachrichten zu. Die neu in die Funkzelle der Basisstation BS hinzugekommene Mobilstation überwacht die Subbänder des Frequenzbandes, um ihre Nachbarmobilstation zu detektieren. Das Ergebnis der Detektion sendet sie zur Basisstation BS. Auch die anderen Mobilstationen versenden in regelmäßigen Zeitabständen Informationen über die von ihnen ermittelten Nachbarmobilstationen an die Basisstation BS. Auf diese Weise hat die Basisstation BS Kenntnis von der aktuellen Topologie des Netzwerkes. Im Anschluss an die Detektion von Nachbarmobilstationen durch die neu hinzugekommene Mobilstation weist die Basisstation BS dieser eines oder mehrere Subbänder zur Kommunikation mit benachbarten Mobilstationen zu.

Zur Ermittlung des Pfades zwischen der Mobilstation MN11 und dem Funkzugangspunkt AP sendet die Mobilstation MN11 eine Anfrage zur Basisstation BS. Diese bestimmt daraufhin einen geeigneten Pfad zwischen der Mobilstation MN11 und dem Funkzugangspunkt AP. Das Verfahren, welches die Basisstation BS ausgehend von der aktuellen Netzwerktopologie zur Bestimmung des Pfades anwendet, ist für das Verständnis der Erfindung nicht von Relevanz. Im Beispiel der Figur 1 umfasst der von der Basisstation BS bestimmte Pfad die Mobilstationen MN12, MN21 und MN23. Da es sich bei den Mobilstationen MN12, MN21 und MN23 des Pfades jeweils um benachbarte Mobilstationen handelt, können Informationen von der Mobilstation MN11 über die Mobilstationen MN12, MN21 und MN23 des Pfades an den Funkzugangspunkt AP über den Pfad übermittelt werden.

Nachdem die Basisstation BS die Mobilstationen MN12, MN21 und MN23 des Pfades bestimmt hat, werden diesen Mobilstationen MN12, MN21 und MN23 geeignete Informationen über den Pfad übertragen, so dass eine Kommunikation zwischen der Mobilstation MN11 und dem Funkzugangspunkt AP stattfinden kann. Hierzu überträgt die Basisstation BS der Mobilstation MN11, den Mobilstationen MN12, MN21 und MN23, sowie dem Funkzugangspunkt AP eine Identifikationsinformation des Pfades in Form einer Pfadnummer. Weiterhin wird den Mobilstationen eine Identifikationsinformation derjenigen Mobilstation übermittelt, an welche sie die Daten bei einer Kommunikation zwischen der Mobilstation MN11 und dem Funkzugangspunkt AP weiterleiten soll: der Mobilstation MN11 wird Identifikationsinformation der Mobilstation MN12 gesendet, der Mobilstation MN12 wird Identifikationsinformation der Mobilstation MN21 gesendet, der Mobilstation MN21 wird Identifikationsinformation der Mobilstation MN23 gesendet und der Mobilstation MN23 wird Identifikationsinformation der Empfängermobilstation, d.h. des Funkzugangspunktes AP, gesendet. Schließlich empfangen die Mobilstationen MN11, MN12, MN21, MN23 zusätzlich zur Identifikationsinformation der jeweils nächsten Mobilstation Informationen über die dieser nächsten Mobilstation zugewiesenen Subbänder von der Basisstation BS. So empfängt die Mobilstation MN11 Informationen über die Subbänder der Mobilstation MN12, die Mobilstationen MN12 über die Subbänder der Mobilstationen MN21, die Mobilstation MN21 über die Subbänder der Mobilstationen MN23, und die Mobilstation MN23 über die Subbänder des Funkzugangspunktes AP.

Weiterhin ist es möglich, dass die Basisstation BS den Mobilstationen MN11, MN12, MN21, MN23 zusammen mit der bisher beschriebenen Pfadinformation Informationen über die ihnen zugewiesenen Subbänder versendet. So kann die Basisstation BS z.B. der Mobilstation MN12 mitteilen, welche Subbänder von ihr zur Kommunikation verwendet werden können. Diese Zuweisung von Subbändern kann eine zuvor erfolgte Zuweisung bestätigen oder auch korrigieren. Eine Korrektur einer zuvor erfolgten Zuweisung ist z.B. dann sinnvoll, wenn eine Mobilstation entlang des Pfades bei einer Übertragung von Daten von der Mobilstation MN11 zu dem Funkzugangspunkt AP feststellt, dass ihr Funkressourcen nicht in ausreichendem Maß zur Weiterleitung der Daten zur Verfügung stehen.

Die beschriebenen Routinginformationen können von der Basisstation BS wiederholt z.B. in regelmäßigen Abständen zur Bestätigung ausgesandt werden. Es ist jedoch auch möglich, dass der ermittelte Pfad von der Basisstation BS mit der Zeit modifiziert wird. Dies ist insbesondere dann sinnvoll, wenn sich Mobilstationen des Pfades fortbewegen und somit nicht mehr als Relaisstationen fungieren können oder wenn neue Mobilstationen in die Nähe des Pfades hinzukommen, so dass ein geeigneterer Pfad existiert.

Aufgrund der von der Basisstation BS übermittelten Routinginformationen können Daten von der Mobilstation MN11 an den Funkzugangspunkt AP übertragen werden. Hierzu verwenden die Mobilstationen MN11, MN12, MN21 und MN23 die Identifikationsinformation des Pfades, so dass der jeweils folgenden Mobilstation bekannt ist, über welchen Pfad die Daten weiterzuleiten sind. Weiterhin kennt jede Mobilstation aufgrund der ihr übermittelten Identifikationsinformation ihre benachbarte Mobilstation entlang des Pfades, an welche die Daten weiterzuleiten sind. Diese Weiterleitung kann z.B. unter Verwendung der Subbänder der benachbarten Mobilstation, an welche die Daten weitergeleitet werden, stattfinden. Es ist jedoch auch möglich, dass die Mobilstationen die ihnen zugewiesenen Subbänder zur Weiterleitung der Daten verwenden.

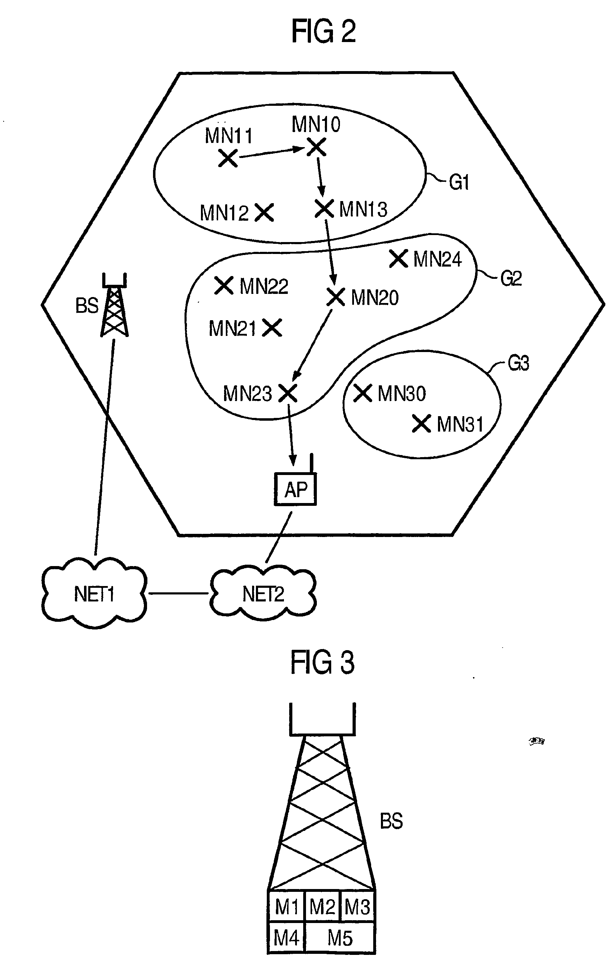

Figur 2 zeigt das bisher betrachtete Funkkommunikationssystem, wobei die Mobilstationen in Gruppen eingeteilt sind. Die Mobilstationen MN10, MN11, MN12 und MN13 sind Bestandteil der ersten Gruppe G1, die Mobilstationen MN20, MN21, MN22, MN23 und MN24 sind Bestandteil der zweiten Gruppe G2 und die Mobilstationen MN30 und MN31 sind Bestandteil dritten Gruppe G3. Jede Gruppe G1, G2, G3 weist eine zentrale Mobilstation MN10, MN20 und MN30 auf. Die zentralen Mobilstationen MN10, MN20 und MN30 sind benachbart zu allen anderen Mobilstationen derselben Gruppe, so dass sie mit allen Mobilstationen der Gruppe kommunizieren können.

Die Basisstation BS weist einer Gruppe eine Anzahl an Subbändern zur Kommunikation zu, wobei diese Zuweisung an die zentrale Mobilstation der jeweiligen Gruppe erfolgt. Daraufhin weist die zentrale Mobilstation MN10, MN20 und MN30 einer jeden Gruppe die ihr von der Basisstation BS zugewiesenen Subbänder wiederum den einzelnen Mobilstationen ihrer Gruppe dynamisch zu. Zur Kommunikation zwischen den Gruppen bestimmt die zentrale Mobilstation einer jeden Gruppe eine Mobilstation, welche mit der zentralen Mobilstation der benachbarten Gruppe kommuniziert. Im Beispiel der Figur 2 bestimmt die zentrale Mobilstation MN10 die Mobilstation MN13 zur Kommunikation mit der zentralen Mobilstation MN20 der Gruppe G2. Die zentrale Mobilstation MN20 bestimmt die Mobilstation MN23 zur Kommunikation mit der zentralen Mobilstation MN30 der dritten Gruppe G3 sowie zur Kommunikation mit dem Funkzugangspunkt AP.

Im folgenden wird wieder der Fall betrachtet, dass die Mobilstation MN11 mit dem Funkzugangspunkt AP kommunizieren will. Hierzu sendet sie eine entsprechende Anfrage an die Basisstation BS. Die Basisstation BS bestimmt nun jedoch nicht den vollständigen Pfad zwischen der Mobilstation MN11 und dem Funkzugangspunkt AP, sondern vielmehr nur die zentralen Mobilstationen entlang des Pfades. So bestimmt die Basisstation BS die Mobilstationen MN10 und MN20 als Bestandteile des Pfades zwischen der Mobilstation MN11 und dem Funkzugangspunkt AP.

Im Anschluss übermittelt die Basisstation BS Routinginformation an Mobilstationen. An die Mobilstation MN11 wird die Identifikationsinformation des Pfades übertragen. An die zentrale Mobilstation MN10 wird Identifikationsinformation des Pfades und Identifikationsinformation der nächsten zentralen Mobilstation entlang des Pfades, d.h. Identifikationsinformation der Mobilstation MN20, übertragen. Da die Mobilstation MN20 keine benachbarte zentrale Mobilstation auf dem Pfad von der Mobilstation MN11 an den Funkzugangspunkt AP hat, wird der Mobilstation MN20 neben der Identifikationsinformation des Pfades Identifikationsinformation der Empfängerstation, d.h. des Funkzugangspunktes AP, übermittelt.

Im Anschluss senden die zentralen Mobilstationen MN10 und MN20 an diejenigen Mobilstationen ihrer Gruppe Routinginformationen, welche Daten zur nächsten zentralen Mobilstation weiterleiten sollen. So überträgt die Mobilstation MN10 Identifikationsinformation des Pfades und Identifikationsinformation der Mobilstation MN20 sowie die der Mobilstation MN20 zugewiesenen Subbänder an die Mobilstation MN13. Ebenso überträgt die Mobilstation MN20 Identifikationsinformation des Pfades und Identifikationsinformation des Funkzugangspunktes AP an die Mobilstation MN23.

Somit können Daten von der Mobilstation MN11 über die zentrale Mobilstation MN10, die weiterleitende Mobilstation MN13, die zentrale Mobilstation MN20, und die weiterleitende Mobilstation MN23 an den Funkzugangspunkt AP übermittelt werden. Diese zweite Ausführungsform des erfindungsgemäßen Verfahrens unterscheidet sich von dem oben beschriebenen dadurch, dass der Basisstation keine vollständigen Informationen über die jeder Mobilstation des WLAN zugewiesenen Subbänder vorliegen. Vielmehr hat die zentrale Mobilstation einer jeden Gruppe die vollständige Kenntnis der jeder Mobilstation ihrer Gruppe zugewiesenen Subbänder. Somit überträgt die Basisstation BS die Informationen über den von ihr bestimmten Pfad nur an einen Teil der Mobilstationen des Pfades, nämlich die zentralen Mobilstationen, welche die zur Weiterleitung von Informationen über den Pfad benötigten Informationen an die weiterleitenden Mobilstationen ihrer Gruppen übermitteln.

Zur Datenübertragung von der Mobilstation MN11 zu dem Funkzugangspunkt AP sendet die Mobilstation MN11 die Identifikationsinformation des Pfades zusammen mit den Daten an die zentrale Mobilstation MN10 ihrer Gruppe G1. Diese leitet die Daten unter Bezugnahme auf die Identifikationsinformation des Pfades an die Mobilstation MN13 weiter. Durch die Mobilstation MN13 erfolgt eine Weiterleitung an die zentrale Mobilstation MN20, welche die Daten über die Mobilstation MN23 an den Funkzugangspunkt AP übermittelt. Hierbei wird bei jeder Weiterleitung der Daten auf die Identifikationsinformation des Pfades Bezug genommen.

Sowohl bei dem Pfad der Figur 1 als auch der Figur 2 ist den Mobilstationen, welche die Daten weiterleiten bekannt, welche Subbänder der benachbarten Mobilstation des Pfades zugewiesen sind. Die Daten können von einer Mobilstation somit unter Verwendung der eigenen zugewiesenen Subbänder oder unter Verwendung der der benachbarten Mobilstation zugewiesenen Subbänder erfolgen.

Auch im Beispiel der Figur 2 kann die Basisstation BS bei der Übermittlung der Routinginformation an die zentralen Mobilstationen eine Korrektur oder Bestätigung von den der jeweiligen Gruppe zugewiesenen Subbänder vornehmen. Auch kann andere Routinginformation wie die benachbarte Mobilstation des Pfades und/oder die dieser Mobilstation zugewiesenen Subbänder durch die Basisstation BS verändert werden.

Weiterhin ist es möglich, dass den Mobilstationen des Pfades gemäß Figur 1 bzw. den zentralen Mobilstationen gemäß Figur 2 auch Identifikationsinformation der jeweils benachbarten Mobilstationen bzw. der jeweils benachbarten zentralen Mobilstation entlang des Pfades in Richtung von dem Funkzugangspunkt AP zu der Mobilstation MN11 übertragen wird. In diesem Fall würde z.B. der Mobilstation MN20 Identifikationsinformation der zentralen Mobilstation MN10, und der zentralen Mobilstation MN10 Identifikationsinformation der Mobilstation MN11 übermittelt. Weiterhin wird zu jeder Mobilstation, bezüglich welcher Identifikationsinformation übermittelt wird, auch das oder die zugewiesenen Subbänder mitgeteilt.

Figur 3 zeigt eine erfindungsgemäße Basisstation BS mit Mitteln zum Durchführen des oben beschriebenen Verfahrens. Die Mittel M1 dienen zum Speichern der Topologie des Netzwerkes aus Mobilstationen, die Mittel M2 zum Zuweisen von Subbändern an die Mobilstationen. Hiermit können entweder Subbänder an jede einzelne Mobilstation zugewiesen werden, oder auch nur an die zentralen Mobilstationen, welche wiederum Subbänder an die Mobilstationen ihrer Gruppe zuweisen können. Die Mittel M3 dienen zum Speichern der durch die Basisstation BS erfolgten Zuweisungen. Mit den Mitteln M4 kann die Basisstation BS zumindest Teile eines Pfades zwischen zwei Mobilstationen auf eine diesbezügliche Anfrage bestimmen. Es ist möglich, dass die Basisstation BS den vollständigen Pfad, d.h. alle Mobilstationen des Pfades bestimmt, oder auch das nur einzelne Mobilstationen des Pfades, wie z.B. die zentralen Mobilstationen der Figur 2. Aufgrund der Mittel M5 kann die Basisstation BS Informationen über den bestimmten Pfad an Mobilstationen versenden, wobei diese Informationen Pfad-Identifikationsinformation des bestimmten Pfades umfassen, sowie Mobilstations-Identifikationsinformation von zumindest einer anderen Mobilstation des Pfades oder auch der zweiten Mobilstation, sowie Subband-Information über mindestens ein der mindestens einen zu der Mobilstations-Identifikationsinformation korrespondierenden Mobilstation zugewiesenes Subband.

## Patentansprüche

1. Verfahren zur Ermittlung eines Pfades zwischen einer ersten (MN11) und einer zweiten (AP) Funkstation eines Funkkommunikationssystems,
- wobei das Funkkommunikationssystem neben der ersten (MN11) und der zweiten (AP) Funkstation eine oder mehrere weitere Funkstationen (MN10, MN12, MN13, MN20, MN21, MN22, MN23, MN24, MN30, MN31) umfasst,
- wobei zur Kommunikation zwischen den Funkstationen ein in eine Mehrzahl von Subbändern aufgeteiltes Frequenzband verwendet wird,
- wobei den Funkstationen jeweils mindestens ein Subband zur Kommunikation zugewiesen ist,
- wobei der Pfad über eine oder mehrere der weiteren Funkstationen (MN12, MN21, MN23; MN10, MN13, MN20, MN23) verläuft, so dass Informationen zwischen der ersten (MN11) und der zweiten (AP) Funkstation über den Pfad übertragbar sind,
wobei der Pfad zumindest teilweise von einer Funkeinrichtung (BS) auf Anfrage der ersten Funkstation (MN11) bestimmt wird,
- wobei die Funkeinrichtung (BS) der ersten Funkstation (MN11) zumindest Pfad-Identifikationsinformation übermittelt, **dadurch gekennzeichnet, dass**
- die Funkeinrichtung (BS) zumindest einem Teil der Funkstationen (MN12, MN21, MN23; MN10, MN20) des Pfades jeweils
• Pfad-Identifikationsinformation und
• Funkstations-Identifikationsinformation von zumindest einer anderen Funkstation des Pfades und/oder von der ersten (MN11) und/oder der zweiten (AP) Funkstation und
• Subband-Information über mindestens ein der mindestens einen zu der Funkstations-Identifikationsinformation korrespondierenden Funkstation zugewiesenes Subband übermittelt.

2. Verfahren nach Anspruch 1,
**dadurch gekennzeichnet,**
**dass** die Funkeinrichtung (BS)
- der ersten Funkstation (MN11) zusätzlich
• Funkstations-Identifikationsinformation der ihr in Pfadrichtung von der ersten (MN11) zu der zweiten (AP) Funkstation benachbarten Funkstation (MN12) des Pfades und
• Subband-Information über mindestens ein dieser benachbarten Funkstation (MN12) zugewiesenes Subband
und
- jeder Funkstation (MN12, MN21, MN23) des Pfades
• Pfad-Identifikationsinformation,
• Funkstations-Identifikationsinformation der ihr in Pfadrichtung von der ersten (MN11) zu der zweiten (AP) Funkstation benachbarten Funkstation (MN21, MN23) des Pfades oder im Falle der in Pfadrichtung von der ersten (MN11) zu der zweiten (AP) Funkstation letzten Funkstation (MN23) des Pfades der zweiten (AP) Funkstation,
• Subband-Information über mindestens ein dieser benachbarten Funkstation (MN21, MN23, AP) zugewiesenes Subband
übermittelt.

3. Verfahren nach Anspruch 2,
**dadurch gekennzeichnet,**
**dass** die Funkeinrichtung (BS) jeder Funkstation (MN12, MN21, MN23) des Pfades zusätzlich
• Funkstations-Identifikationsinformation der ihr in Pfadrichtung von der zweiten (AP) zu der ersten (MN11) Funkstation benachbarten Funkstation (MN12, MN21) des Pfades oder im Falle der in Pfadrichtung von der zweiten (AP) zu der ersten (MN11) Funkstation letzten Funkstation (MN12) des Pfades der ersten Funkstation (MN11),
• Subband-Information über mindestens ein dieser benachbarten Funkstation (MN11, MN12, MN21) zugewiesenes Subband
übermittelt.

4. verfahren nach einem der Ansprüche 1 bis 3,
**dadurch gekennzeichnet,**
**dass** die Funkeinrichtung (BS) der zweiten Funkstation (AP) zumindest Pfad-Identifikationsinformation übermittelt.

5. verfahren nach Anspruch 4,
**dadurch gekennzeichnet,**
**dass** die Funkeinrichtung (BS) der zweiten Funkstation (AP) zusätzlich
• Funkstations-Identifikationsinformation der ihr in Pfadrichtung von der zweiten (AP) zu der ersten (MN11) Funkstation benachbarten Funkstation (MN23) des Pfades und
• Subband-Information über mindestens ein dieser benachbarten Funkstation (MN23) des Pfades zugewiesenes Subband übermittelt.

6. Verfahren nach Anspruch 1,
**dadurch gekennzeichnet,**
**dass** die Funkstationen des Funkkommunikationssystems in Gruppen (G1, G2, G3) zusammengefasst sind, und
**dass** die Funkstationen (MN10, MN20) des Teils der Funkstationen des Pfades, welchen die Funkeinrichtung (BS) Pfad-Identifikationsinformation, Funkstations-Identifikationsinformation und Subband-Information übermittelt, jeweils einer unterschiedlichen Gruppe (G1, G2) angehören.

7. Verfahren nach Anspruch 6,
**dadurch gekennzeichnet,**
**dass** sich die der Funkstation oder den Funkstationen (MN10, MN20) des Teils der Funkstationen übermittelte Funkstations-Identifikationsinformation und Subband-Information
• auf die ihnen in Pfadrichtung von der ersten (MN11) zu der zweiten (AP) Funkstation nächste Funkstation (MN20) des Teils der Funkstationen oder
• bei der in Pfadrichtung von der ersten (MN11) zu der zweiten (AP) Funkstation letzten Funkstation (MN20) des Teils der Funkstationen auf die zweite Funkstation (AP)
beziehen.

8. Verfahren nach Anspruch 7,
**dadurch gekennzeichnet,**
**dass** die der Funkstation oder den Funkstationen (MN10, MN20) des Teils der Funkstationen übermittelte Funkstations-Identifikationsinformation und Subband-Information sich zusätzlich
• auf die ihnen in Pfadrichtung von der zweiten (AP) zu der ersten (MN11) Funkstation nächste Funkstation (MN10) des Teils der Funkstationen oder
• bei der in Pfadrichtung von der zweiten (AP) zu der ersten (MN11) Funkstation letzten Funkstation (MN10) des Teils der Funkstationen auf die erste Funkstation (MN11)
beziehen.

9. Verfahren nach einem der Ansprüche 6 bis 8,
**dadurch gekennzeichnet,**
**dass** mindestens eine Funkstation (MN10, MN20) des Teils der Funkstationen ihr von der Funkeinrichtung (BS) übermittelte Pfad-Identifikationsinformation und/oder Funkstations-Identifikationsinformation und/oder Subband-Information an mindestens eine Funkstation (MN13, MN23) ihrer Gruppe (G1, G2), an welche keine Pfad-Identifikationsinformation, Funkstations-Identifikationsinformation und Subband-Information von der Funkeinrichtung (BS) übermittelt wurde, weiterübermittelt.

10. Verfahren nach einem der Ansprüche 1 bis 9,
**dadurch gekennzeichnet,**
**dass** die Funkeinrichtung (BS) der ersten Funkstation (MN11) und/oder der zweiten (AP) Funkstation und/oder zumindest einer Funkstation (MN12, MN21, MN23; MN10, MN20) des Pfades bei der Übermittlung der Pfad-Identifikationsinformation mindestens ein Subband zuweist.

11. Funkeinrichtung (BS) mit
- Mitteln (M1) zum Speichern von Nachbarschaftsbeziehungen zwischen Funkstationen (AP, MN10, MN11, MN12, MN13, MN20, MN21, MN22, MN23, MN24, MN30, MN31) eines Funkkommunikationssystems,
Mitteln (M2) zum jeweiligen Zuweisen von Subbändern eines für die Kommunikation zwischen den Funkstationen verwendeten Frequenzbandes zu zumindest einem Teil der Funkstationen,
- Mitteln (M3) zum Speichern von Informationen über die den Funkstationen zugewiesenen Subbänder,
- Mitteln (M4) zum Bestimmen von zumindest Teilen eines Pfades zwischen einer ersten (MN11) und einer zweiten (AP) Funkstation auf Anfrage, wobei der Pfad über eine oder mehrere der weiteren Funkstationen (MN12, MN21, MN23; MN10, MN13, MN20, MN23) verläuft, so dass Informationen zwischen der ersten (MN11) und der zweiten (AP) Funkstation über den Pfad übertragbar sind, **gekennzeichnet durch**
- Mittel (M5) zum Versenden von Informationen an mindestens eine Funkstation des Pfades, umfassend
• Pfad-Identifikationsinformation des bestimmten Pfades,
• Funkstations-Identifikationsinformation von zumindest einer anderen Funkstation des Pfades oder der zweiten Funkstation (AP),
• Subband-Information über mindestens ein der mindestens einen zu der Funkstations-Identifikationsinformation korrespondierenden Funkstation zugewiesenes Subband.

## Claims

1. Method for determining a path between a first (MN11) and a second (AP) radio station of a radio communications system,
- with the radio communications system comprising, in addition to the first (MN11) and the second (AP) radio station, one or more additional radio stations (MN10, MN12, MN13, MN20, MN21, MN22, MN23, MN24, MN30, MN31),
- with a frequency band subdivided into a number of subbands being used for communication between the radio stations,
- with at least one subband for communication being assigned to the radio stations,
- with the path extending over one or more of the additional radio stations (MN12, MN21, MN23; MN10, MN13, MN20, MN23) so that the information can be transmitted over the path between the first (MN11) and the second (AP) radio station,
- with the path being at least partially determined by a radio installation (BS) on request of the first radio station (MN11)
- with the radio installation (BS) transmitting at least the path identification information to the first radio station (MN11),
- **characterised in that** the radio installation (BS) in each case transmits to at least a part of the radio stations (MN12, MN21, MN23; MN10, MN20) of the path:
• the path identification information and
• the radio station identification information from at least one other radio station of the path and/or from the first (MN11) and/or the second (AP) radio station and
• the subband information about at least one subband assigned to the at least one radio station corresponding to the radio station identification information.

2. Method according to claim 1,
**characterised in that**,
the radio installation (BS)
- of the first radio station (MN11) in addition transmits
• the radio station identification information of the radio station (MN12) of the path adjacent to it in the path direction from the first (MN11) to the second (AP) radio station (MN11)
• the subband information about at least one subband assigned to this neighbouring radio station (MN12) and
- each radio station (MN12, MN21, MN23) of the path transmits
• the path identification information,
• the radio station identification information of the radio station (MN21, MN23) of the path adjacent to it in the path direction from the first (MN11) to the second (AP) radio station or in the case of the last radio station (MN23) of the path of the second (AP) radio station in the path direction from the first (MN11) to the second (AP) radio station, and
• the subband information about at least one subband assigned to this neighbouring radio station (MN21, MN23, AP).

3. Method according to claim 2,
**characterised in that**,
the radio installation (BS) of each radio station (MN12, MN21, MN23) of the path in addition transmits
• the radio station identification information of the radio station (MN12, MN21) of the path adjacent to it in the path direction from the second (AP) to the first (MN11) radio station or in the case of the last radio station (MN12) of the path of the first radio station (MN11) in the path direction from the second (AP) to the first (MN11) radio station, and
• the subband information about at least one subband assigned to this neighbouring radio station (MN11, MN12, MN21).

4. Method according to one of the claims 1 to 3,
**characterised in that**,
the radio installation (BS) transmits at least path identification information to the second radio station (AP).

5. Method according to claim 4,
**characterised in that**,
the radio installation (BS) of the second radio station (AP) in addition transmits
• the radio station identification information of the radio station (MN23) of the path adjacent to it in the path direction from the second (AP) to the first (MN11) radio station and
• the subband information about at least one subband assigned to this neighbouring radio station (MN23) of the path.

6. Method according to claim 1,
**characterised in that**,
the radio stations of the radio communications system are combined into groups (G1, G2, G3) and the radio stations (MN10, MN20) of the part of the radio stations of the path, which transmits the path identification information, the radio station identification information and the subband information to the radio installation (BS), in each case belong to a different group (G1, G2).

7. Method according to claim 6,
**characterised in that**,
the radio station identification information and the subband information transmitted to the radio station or the radio stations (MN10, MN20) of the part of the radio stations
• refer to the next radio station (MN20) of the part of the radio stations in the path direction from the first (MN11) to the second (AP) radio station or
• in the case of the last radio station (MN20) of the part of the radio station in the path direction from the first (MN11) to the second (AP) radio station refer to the second radio station (AP).

8. Method according to claim 7,
**characterised in that**,
the radio station identification information and the subband information transmitted to the radio station or the radio stations (MN10, MN20) of the part of the radio stations in addition
• refer to the next radio station (MN10) of the part of the radio stations in the path direction from the second (AP) to the first (MN11) radio station or
• in the case of the last radio station (MN10) of the part of the radio stations in the path direction from the second (AP) to the first (MN11) radio station refer to the first radio station (MN11).

9. Method according to one of the claims 6 to 8,
**characterised in that**,
at least one radio station (MN10, MN20) of the part of the radio stations forwards the path information and/or the radio station identification information and/or the subband information transmitted to it by the radio installation (BS) to at least one radio station (MN13, MN23) of its group (G1, G2), to which no path identification information, radio station identification information and subband information has been transmitted by the radio installation (BS).

10. Method according to one of the claims 1 to 9,
**characterised in that**,
the radio installation (BS) assigns at least one subband to the first radio station (MN11) and/or the second (AP) radio station and/or at least one radio station (MN12, MN21, MN23; MN10, MN20) of the path when transmitting the path identification information.

11. Radio installation (BS) with
- means (M1) for storing the neighbouring relationships between the radio stations (AP, MN10, MN11, MN12, MN13, MN20, MN21, MN22, MN23, MN24, MN30, MN31) of a radio communications system,
- means (M2) for the respective assignment of subbands of a frequency band used for communication between the radio stations to at least one part of the radio stations,
- means (M3) for storing the information about the subbands assigned to the radio stations,
- means (M4) for determining at least the parts of a path between a first (MN11) and a second (AP) radio station on request, whereby the path extends over one or more of the additional radio stations (MN12, MN21, MN23; MN10, MN13, MN20, MN23) so that the information can be transmitted over the path between the first (MN11) and the second (AP) radio station, **characterised by**
- means (M5) for transmitting the information to at least one radio station of the path, comprising
• the path identification information of the specific path,
• the radio station identification information from at least another radio station of the path or the second radio station (AP), and
• the subband information about at least one subband assigned to the at least one radio station corresponding to the radio station identification information.

## Revendications

1. Procédé de détermination d'un trajet entre une première station radio (MN11) et une deuxième station radio (AP) d'un système de radiocommunication,
- le système de radiocommunication, outre la première station radio (MN11) et la deuxième station radio (AP), comprenant une ou plusieurs stations radio supplémentaires (MN10, MN12, MN13, MN20, MN21, MN22, MN23, MN24, MN30, MN31),
- une bande de fréquence divisée en une pluralité de sous-bandes étant utilisée pour la communication entre les stations radio,
- au moins une sous-bande étant respectivement affectée aux stations radio pour la communication,
- le trajet passant par une ou plusieurs des stations radio supplémentaires (MN12, MN21, MN23 ; MN10, MN13, MN20, MN23), de sorte que des informations sont transmissibles entre la première station radio (MN11) et la deuxième station radio (AP) par l'intermédiaire du trajet,
- le trajet étant déterminé au moins en partie par un dispositif radio (BS) sur demande de la première station radio (MN11),
- le dispositif radio (BS) de la première station radio (MN11) transmettant au moins une information d'identification du trajet,
**caractérisé en ce que**
- le dispositif radio (BS) transmet au moins à une partie des stations radio (MN12, MN21, MN23 ; MN10, MN20) du trajet, respectivement :
• une information d'identification du trajet et
• une information d'identification de station radio d'au moins une autre station radio du trajet et/ou de la première station radio (MN11) et/ou de la deuxième station radio (AP) et
• une information de sous-bande concernant au moins une sous-bande affectée à l'au moins une station radio correspondant à l'information d'identification de station radio.

2. Procédé selon la revendication 1,
**caractérisé**
**en ce que** le dispositif radio (BS) transmet
- en plus à la première station radio (MN11)
• une information d'identification de station radio de la station radio (MN12) du trajet, qui lui est voisine dans le sens du trajet allant de la première station radio (MN11) vers la deuxième station radio (AP) et
• une information de sous-bande concernant au moins une sous-bande affectée à cette station radio (MN12)
et
- à chaque station radio (MN12, MN21, MN23) du trajet
• une information d'identification du trajet
• une information d'identification de station radio de la station radio (MN21, MN23) du trajet, qui lui est voisine dans le sens du trajet allant de la première station radio (MN11) vers la deuxième station radio (AP) ou
dans le cas de la dernière, dans le sens du trajet allant de la première station radio (MN11) vers la deuxième station radio (AP), station radio (MN23) du trajet de la deuxième station radio (AP),
• une information de sous-bande concernant au moins une sous-bande affectée à cette station radio voisine (MN21, MN23, AP).

3. Procédé selon la revendication 2,
**caractérisé**
**en ce que** le dispositif radio (BS) transmet à chaque station radio (MN12, MN21, MN23) du trajet, en plus
• une information d'identification de station radio de la station radio (MN12, MN21) du trajet, qui lui est voisine dans le sens du trajet allant de la deuxième station radio (AP) vers la première station radio (MN11) ou
dans le cas de la dernière, dans le sens du trajet allant de la deuxième station radio (AP) vers la première station radio (MN11), station radio (MN12) du trajet de la première station radio (MN11),
• une information de sous-bande concernant au moins une sous-bande affectée à cette station radio voisine (MN11, MN12, MN21).

4. Procédé selon l'une quelconque des revendications 1 à 3,
**caractérisé**
**en ce que** le dispositif radio (BS) transmet à la deuxième station radio (AP) au moins une information d'identification de trajet.

5. Procédé selon la revendication 4,
**caractérisé**
**en ce que** le dispositif radio (BS) transmet en plus à la deuxième station radio (AP)
• une information d'identification de station radio de la station radio (MN23) du trajet, qui lui est voisine dans le sens du trajet allant de la deuxième station radio (AP) vers la première station radio (MN11) et
• une information de sous-bande concernant au moins une sous-bande affectée à cette station radio voisine (MN23).

6. Procédé selon la revendication 1,
**caractérisé**
**en ce que** les stations radio du système de radiocommunication sont regroupées en groupes (G1, G2, G3) et en ce que les stations radio (MN10, MN20) de la partie des stations radio du trajet, auxquelles le dispositif radio (BS) transmet l'information d'identification de trajet, l'information d'identification de station radio et l'information de sous-bande, appartiennent respectivement à un groupe différent (G1, G2).

7. Procédé selon la revendication 6,
**caractérisé**
**en ce que** l'information d'identification de station radio transmise à la station radio ou aux stations radio (MN10, MN20) de la partie des stations radio et l'information de sous-bande font référence
• à la station radio (MN20), qui leur est suivante dans le sens du trajet allant de la première station radio (MN11) à la deuxième station radio (AP), de la partie des stations radio ou
• à la deuxième station radio (AP) dans le cas de la dernière, dans le sens du trajet allant de la première station radio (MN11) à la deuxième station radio (AP), station radio (MN20) de la partie des stations radio.

8. Procédé selon la revendication 7,
**caractérisé**
**en ce que** l'information d'identification de station radio transmise à la station radio ou aux stations radio (MN10, MN20) de la partie des stations radio et l'information de sous-bande font référence en plus
• à la station radio (MN10), qui leur st suivante dans le sens du trajet allant de la deuxième station radio (AP) à la première station radio (MN11), de la partie des stations radio ou
• à la première station radio (MN11) dans le cas de la dernière, dans le sens du trajet allant de la deuxième station radio (AP) à la première station radio (MN11), station radio (MN10) de la partie des stations radio.

9. Procédé selon l'une quelconque des revendications 6 à 8,
**caractérisé**
**en ce qu'**au moins une station radio (MN10, MN20) de la partie des stations radio achemine à au moins une station radio (MN13, MN23) de son groupe (G1, G2), à laquelle aucune information d'identification de trajet, aucune information d'identification de station radio et aucune information de sous-bande n'a été transmise par le dispositif radio (BS), l'information d'identification de trajet et/ou l'information d'identification de station radio et/ou l'information de sous-bande qui lui ont été transmises par le dispositif radio (BS).

10. Procédé selon l'une quelconque des revendications 1 à 9,
**caractérisé**
**en ce que** le dispositif radio (BS) affecte au moins une sous-bande à la première station radio (MN11) et/ou à la deuxième station radio (AP) et/ou au moins à une station radio (MN12, MN21, MN23 ; MN10, MN20) du trajet lors de la transmission de l'information d'identification de trajet.

11. Dispositif radio (BS) comprenant
- des moyens (M1) pour mémoriser des relations de voisinage entre des stations radio (AP, MN10, MN11, MN12, MN13, MN20, MN21, MN22, MN23, MN24, MN30, MN31) d'un système de radiocommunication,
- des moyens (M2) pour l'affectation respective de sous-bandes d'une bande de fréquence, utilisée pour la communication entre les stations radio, à au moins une partie des stations radio,
- des moyens (M3) pour mémoriser des informations concernant les sous-bandes affectées aux stations radio,
- des moyens (M4) pour déterminer au moins des parties d'un trajet entre une première station radio (MN11) et une deuxième station radio (AP) sur demande, le trajet passant par une ou plusieurs des stations radio supplémentaires (MN12, MN21, MN23 ; MN10, MN13, MN20, MN23), de sorte que des informations sont transmissibles entre la première station radio (MN11) et la deuxième station radio (AP) par l'intermédiaire du trajet, **caractérisé par**
- des moyens (M5) pour émettre des informations à au moins une station radio du trajet, comprenant
• une information d'identification de trajet du trajet déterminé,
• une information d'identification de station radio d'au moins une autre station radio du trajet ou de la deuxième station radio (AP),
• une information de sous-bande concernant au moins une sous-bande affectée à l'au moins une station radio correspondant à l'information d'identification de station radio.
